# EUROPÄISCHE PATENTANMELDUNG

(11) **EP 2 226 925 A1**
(43) Veröffentlichungstag der Anmeldung: **08.09.2010**
(21) Anmeldenummer: 10154530.9
(22) Anmeldetag: 24.02.2010
(51) Int. Cl.: H02M 5/451, H02M 5/458, H02M 7/525, H02M 7/539

(54) **Spannungszwischenkreis-Wechselstromumrichter und Verfahren zur Herstellung eines solchen**

(30) Priorität: 02.03.2009 DE 102009011254
(71) Anmelder: Schwering & Hasse Elektrodraht GmbH, 32676 Lügde (DE)
(72) Erfinder: Manazza, Massimo, 32676 Lügde (DE)
(74) Vertreter: Herzog, Markus

(57) **Zusammenfassung**

Frequenzumrichter (10) zum Betreiben eines Leistungsverbrauchers (M), insbesondere eines Elektromotors, wobei der Frequenzumrichter (10) umfasst: eine Gleichrichterschaltung (12) zum Umwandeln einer Eingangsspannung (U_{E}) in eine Gleichrichterausgangsspannung (U_{GA}), einen Gleichspannungszwischenkreis (14) zum Glätten der Gleichrichterausgangsspannung (U_{GA}) und zur Erzeugung einer Gleichspannung, wobei der Gleichspannungszwischenkreis (14) eine Kondensatoranordnung (18) mit mindestens einem Kondensator (24) aufweist, sowie einen Wechselrichter (16) zum Umwandeln der Gleichspannung in eine Wechselspannung (U_{A}) bestimmter Frequenz und Amplitude zur Ansteuerung des Leistungsverbrauchers (M), wobei der Frequenzumrichter (10) eine Pufferungseinrichtung (18, 20) aufweist, welche eine vorbestimmte Menge elektrischer Energie speichert und welche im Falle eines störungsbedingten Abfalls der Eingangsspannung (U_{E}) eine für den Betrieb des Leistungsverbrauchers (M) erforderliche Sollleistungsabgabe des Frequenzumrichters (10) durch Abgabe der gespeicherten elektrischen Energie für eine vorbestimmte Zeitdauer aufrecht erhält, wobei die Pufferungseinrichtung die elektrische Energie in der Kondensatoranordnung (18) des Gleichspannungszwischenkreises (14) speichert.

## Beschreibung

Die vorliegende Erfindung betrifft einen Frequenzumrichter zum Betreiben eines Leistungsverbrauchers, insbesondere eines Elektromotors, sowie ein Verfahren zum Herstellen eines solchen Frequenzumrichters, wobei der Frequenzumrichter umfasst: eine Gleichrichterschaltung zum Umwandeln einer Eingangsspannung des Frequenzumrichters in eine Gleichrichterausgangsspannung, einen Gleichspannungszwischenkreis zum Glätten der Gleichrichterausgangsspannung und zur Erzeugung einer Gleichspannung, wobei der Gleichspannungszwischenkreis eine Kondensatoranordnung mit mindestens einem Kondensator aufweist, sowie einen Wechselrichter zum Umwandeln der Gleichspannung in eine Wechselspannung bestimmter Frequenz und Amplitude zur Ansteuerung des Leistungsverbrauchers.

Solche Frequenzumrichter sind für verschiedenste Anwendungen seit langem bekannt und wandeln einen Wechselstrom aus einem Versorgungsnetz in eine Ausgangswechselspannung mit vorbestimmter Amplitude und vorbestimmter Frequenz, insbesondere mit einer von der Frequenz des Versorgungsnetz abweichenden Frequenz um. Mit der Ausgangswechselspannung wird ein Verbraucher, wie etwa ein Elektromotor (zum Beispiel Asynchron-Motor) betrieben. Bekannte Frequenzumrichter führen die Eingangswechselspannung in der Gleichrichterschaltung einer Diodenanordnung zu, welche negative Anteile der Eingangswechseispannung abschneidet oder in entsprechende positive Spannungsanteile mit gleichem Amplitudenbetrag umwandelt, so dass nur positive Spannungspegel die Gleichrichterschaltung verlassen. Die von der Gleichrichterschaltung abgegebene Spannung ist jedoch zeitlich noch nicht konstant, sondern schwankt weiterhin mit der Frequenz oder der doppelten Frequenz der Eingangswechselspannung. Zur Glättung der Spannung auf einen im Wesentlichen konstanten Gleichspannungspegel verwenden herkömmliche Frequenzumrichter einen Gleichspannungszwischenkreis mit einem Glättungskondensator, der derart ausgelegt ist, dass er mit einer Zeitkonstante, die der Frequenz der Eingangswechselspannung oder der doppelten Frequenz der Eingangswechselspannung entspricht, abwechselnd geladen und entladen wird, so dass durch die dabei vom Glättungskondensator abwechselnd gespeicherten oder abgegebenen Ladungen die periodischen Schwankungen der Gleichrichterausgangsspannung geglättet werden. Dementsprechend wird die Größe C des Kondensators so gewählt, dass die Zeitkonstante T = R · C in etwa der Periodendauer der Eingangswechselspannung (üblicherweise 50 Hz) entspricht.

Im Falle eines plötzlichen, störungsbedingten Abfalls der Eingangswechselspannung auf Grund von Netzschwankungen oder bei einem Netzausfall oder dergleichen bricht auch die Ausgangsspannung des Frequenzumrichters und damit die Stromversorgung des Leistungsversorgers sofort zusammen. Ein solcher plötzlicher Ausfall der Stromversorgung kann für Leistungsverbraucher, insbesondere für Elektromotoren oder/und daran angeschlossene mechanische Bauteile und Anlagen eine große Belastung darstellen und zu Schäden an mechanischen Komponenten, zum Beispiel durch trägheitsbedingtes Weiterbewegen von Teilen oder Produkten führen. Um einen solchen schlagartigen Versorgungsausfall und die damit einhergehenden Nachteile zu vermeiden, verwenden bekannte Anlagen eine Pufferungseinrichtung, welche dem Frequenzumrichter beispielsweise parallel geschaltet ist oder welche automatisch bei einem Ausfall der Eingangsspannung anstelle des Frequenzumrichters zuschaltbar ist, um die ausgefallene Ausgangsleistung des Frequenzumrichters weitestgehend zu kompensieren und den Betrieb des Leistungsverbrauchers eine gewisse Zeitdauer lang aufrechtzuerhalten. Bei kurzzeitigen Netzschankungen oder sehr kurzen Netzausfällen kann der Leistungsverbraucher aufgrund einer solchen Pufferungseinrichtung sogar nahezu unbeeinflusst von der Netzstörung weiterlaufen. Die Bereitstellung einer zusätzlichen Pufferungseinrichtung erhöht jedoch die Komplexität und die Störungsanfälligkeit der Stromversorgung und erfordert erhöhten Kostenaufwand für Installation und Wartung sowie größeren Bauraum.

Vor diesem Hintergrund ist es Aufgabe der Erfindung, eine Vorrichtung für eine Wechselstromversorgung für einen Leistungsverbraucher, insbesondere für einen Elektromotor, bereitzustellen, welche über eine Pufferungseinrichtung für eine Leistungsabgabe im Störungsfall verfügt, welche jedoch einfacher, kostengünstiger und mit geringerem Bauraum herstellbar ist. Ferner ist es Aufgabe der Erfindung, ein Verfahren zum Herstellen einer solchen Vorrichtung anzugeben.

Erfindungsgemäß wird die vorstehende Aufgabe gelöst durch einen Frequenzumrichter der eingangs genannten Art, welcher eine Pufferungseinrichtung umfasst, die eine vorbestimmte Menge elektrischer Energie speichert, und die im Falle eines störungsbedingten Abfalls der Eingangsspannung einen für den Betrieb des Leistungsverbrauchers erforderliche Sollleistungsabgabe des Frequenzumrichters durch Abgabe der gespeicherten elektrischen Energie für eine vorbestimmte Zeitdauer aufrecht erhält, wobei die Pufferungseinrichtung die elektrische Energie in der Kondensatoranordnung des Gleichspannungszwischenkreises speichert.

Ein wesentlicher Gedanke der Erfindung liegt somit darin, die Pufferungseinrichtung in den Frequenzumrichter zu integrieren und zu diesem Zweck die Kondensatoranordnung des zur Glättung der Gleichrichterausgangsspannung bereitgestellten Gleichspannungszwischenkreises zur Speicherung elektrischer Energie für die Pufferungseinrichtung zu verwenden. Dies wird dadurch realisiert, dass die Kondensatoranordnung im Gegensatz zum Stand der Technik nicht nach Maßgabe der Periodendauer der Eingangswechselspannung konzipiert wird, das heißt nicht auf die Funktion der Glättung der Gleichrichterausgangsspannung zugeschnitten wird, sondern im Hinblick auf Kondensatorbestückung und Kenndaten so ausgelegt ist, dass die Sollleistungsabgabe des Frequenzumrichters durch Abgabe der in der Kondensatoranordnung gespeicherten elektrischen Energie für die vorbestimmte Zeitdauer aufrecht erhalten werden kann. Dementsprechend sind erfindungsgemäß insbesondere die Gesamtkapazität, die maximal zulässige Lade- und Entladebelastbarkeit (maximaler Lade- und Entladestrom, Temperaturbeständigkeit bzw. Leistungsaufnahme) und ähnliche Kenndaten der Kondensatoranordnung gemäß ihrer Funktion als Teil der Pufferungseinrichtung gewählt, nämlich derart, dass eine für die Aufrechterhaltung der Sollleistungsabgabe für die vorbestimmte Zeitdauer notwendige Ladungsmenge in der Kondensatoranordnung gespeichert werden kann und in einer mit der vorbestimmten Zeitdauer vergleichbaren Zeit auf die Kondensatoranordnung geladen oder von dieser entladen werden kann.

Durch die erfindungsgemäße Integration der Pufferungseinrichtung in den Gleichspannungszwischenkreis des Frequenzumrichters wird gleichzeitig eine vorteilhafte Doppelfunktion der Kondensatoranordnung sowohl als Energiespeicher für die Pufferungseinrichtung als auch als Glättungskondensatoranordnung zum Glätten der Gleichrichterausgangsspannung erzielt. Durch die gegenüber herkömmlichen Frequenzumrichtern um ein starkes Maß überdimensionierte Kondensatoranordnung kann gleichzeitig eine ausreichend große Lade- und Entladezeitkonstante zur zuverlässigen Glättung der Gleichrichterausgangsspannung bereitgestellt werden.

Durch die Erfindung kann ferner der Frequenzumrichter mit integrierter Pufferungseinrichtung in einem gemeinsamen kompakten Gerät untergebracht werden, zum Beispiel in einem gemeinsamen Gehäuse, so dass sowohl Bauraum als auch Konstruktions- und Installationsaufwand reduziert werden können. Außerdem wird die Bedienung und Wartung vereinfacht und aufgrund gemeinsam verwendeter Bauteile kann eine Kosteneinsparung erzielt werden.

In einer bevorzugten Ausführungsform der Erfindung wird die Kondensatoranordnung durch die Gleichrichterausgangsspannung geladen. Der Frequenzumrichter benötigt dann keine eigene Stromversorgung oder eigene Stromwandlung zur Bereitstellung der in der Kondensatoranordnung zu speichernden elektrischen Energie. Die Kondensatoranordnung kann dazu in einfacher Weise parallel zum Ausgang der Gleichrichterschaltung geschaltet werden, um so einerseits Glättungsfunktion und andererseits Pufferungsfunktion zu übernehmen.

Vorzugsweise umfasst der erfindungsgemäße Frequenzumrichter eine Ladungsüberwachungseinrichtung zur Erfassung eines die Ladung der Kondensatoranordnung repräsentierenden Ladungswerts, insbesondere einer Spannung der Kondensatoranordnung oder einer eine Lade- oder Entladezeit angebenden Zeitgröße. Als Ladungswert kommt jede erfassbare Größe des Frequenzumrichters infrage, solange sie Rückschlüsse auf die in der Kondensatoranordnung gespeicherte Ladung erlaubt. Ferner kann der Frequenzumrichter eine elektronische Steuerungseinrichtung aufweisen, welche den Frequenzumrichter in Abhängigkeit von der Ladung der Kondensatoranordnung oder in Abhängigkeit vom Ladungswert ansteuert. Auf diese Weise kann ein Lade- oder Entladevorgang beeinflusst und optimiert werden.

Gemäß einer weiteren Ausführungsform der Erfindung ist vorgesehen, dass die elektronische Steuereinrichtung in einem Startbetriebsmodus die Leistungsabgabe des Frequenzumrichters unterbricht, wenn die Ladung der Kondensatoranordnung unter einer vorbestimmten Vollladung liegt, und die Leistungsabgabe des Frequenzumrichters freigibt, wenn die Gesamtladung der Kondensatoranordnung die vorbestimmte Vollladung erreicht oder überschreitet. Der Begriff "Vollladung" bezeichnet dabei nicht notwendigerweise einen Zustand, in welchem die Kondensatoranordnung vollständig geladen ist, sondern bezeichnet einen für die beschriebene Ansteuerung maßgebenden Schwellwert, bei dessen Überschreiten der Frequenzumrichter seine Leistungsabgabe an den Leistungsverbraucher aufnehmen kann. Vorteilhaft kann für diesen Schwellwert eine Ladungsmenge angesetzt werden, die in etwa der vorbestimmten Menge elektrischer Energie entspricht, die erforderlich ist, um im Falle eines Abfalls der Eingangsspannung die zur Leistungsabgabe des Frequenzumrichters für die vorbestimmte Zeitdauer aufrecht zu erhalten. Um zu beurteilen, ob die Ladung der Kondensatoranordnung über oder unter einem bestimmten Ladungsschwellwert liegt, wird man vorzugsweise einen dem Ladungsschwellwert entsprechenden Ladungwertschwellwert festlegen und prüfen, in welcher Beziehung der Ladungswert zum Ladungswertschwellwert steht.

In einer weiteren Ausführungsform der Erfindung ist vorgesehen, dass die elektronische Steuereinrichtung einen Ladesteuer-/regelabschnitt aufweist, welcher eine an dem mindestens einen Kondensator der Kondensatoranordnung anliegende Ladespannung nach Maßgabe des durch die Ladungsüberwachungseinrichtung erfassten Ladungswerts einstellt. Eine derartige Steuerung des Ladevorgangs nach Maßgabe des Ladungszustands der Kondensatoranordnung erlaubt ein optimiertes Laden der Kondensatoranordnung, so dass die Kondensatoranordnung einerseits vor einer Überlastung durch zu hohe Ladeströme geschützt wird und andererseits in möglichst kurzer Zeit auf den Vollladezustand geladen werden kann.

Alternativ oder zusätzlich zur vorstehend genannten Ausführungsform kann in dem Fall, dass die Kondensatoranordnung eine Mehrzahl von Kondensatoren aufweist, die elektronische Steuereinrichtung einen Ladesteuer-/-regelabschnitt aufweisen, welcher nach Maßgabe des durch die Ladungsüberwachungseinrichtung erfassten Ladungswerts eine bestimmte Ladespannung an eine bestimmte Auswahl von Kondensatoren der Kondensatoranordnung anlegt. Auch auf diese Weise kann die Kondensatoranordnung optimiert geladen werden, um eine Überlastung des Gleichspannungszwischenkreises zu verhindern und gleichzeitig eine möglichst effektive Aufladung zu erreichen.

Die vorstehend genannten Varianten eines Ladesteuer-/-regelabschnitts können vorzugsweise die Ladespannung mit zunehmender Ladung der Kondensatoranordnung zunehmend, insbesondere stufenweise, erhöhen. Da mit zunehmender Ladung der Kondensatoranordnung bei einer bestimmten Ladespannung der auf die Kondensatoranordnung fließende Ladestrom abnimmt, verringert sich mit zunehmender Ladung auch die Effektivität des Ladevorgangs. Wird dagegen erfindungsgemäß die Ladespannung während des Ladevorgangs erhöht, so führt dies zu einer entsprechenden Erhöhung des Ladestroms und somit zu einer Steigerung der Effektivität der Ladung (Verkürzung der Ladezeit).

Dieses Ladeprinzip zur Erhöhung der Effektivität des Ladevorgangs kann in einer besonders einfachen, aber überraschend wirkungsvollen Ausführungsform dadurch realisiert werden, dass der Ladesteuer-/regelabschnitt mindestens zwei zueinander und zur Kondensatoranordnung in Reihe geschaltete Ladewiderstände umfasst, wobei mindestens einer der Ladewiderstände zu einer elektronisch ansteuerbare Überbrückungsschaltung parallel geschaltet ist, wobei der Ladesteuer-/regelabschnitt nach Maßgabe des Ladungswerts der Kondensatoranordnung die Überbrückungsschaltung ansteuert, um den mindestens einen Ladewiderstand zu überbrücken oder zuzuschalten, so dass die Ladespannung der Kondensatoranordnung auf einen größeren beziehungsweise einen kleineren Wert eingestellt wird. Auf diese Weise lässt sich eine stufenweise Veränderung der Ladespannung nach Maßgabe der Ladung der Kondensatoranordnung mit einfachen und kostengünstigen schaltungstechnischen Mitteln verwirklichen.

Mittels der mindestens einen Überbrückungsschaltung gemäß der vorstehend beschriebenen Ausführungsform kann der Frequenzumrichter derart gesteuert werden, dass in einer ersten Phase eines Startbetriebsmodus des Frequenzumrichters der Ladesteuer-/regelabschnitt die Überbrückungsschaltung öffnet, um den mindestens einen Ladewiderstand zuzuschalten, und dass die Überbrückungsschaltung den mindestens einen Ladewiderstand überbrückt, wenn die Ladung der Kondensatoranordnung einen vorbestimmten ersten Schwellwert überschreitet. Vorteilhaft sind die mindestens zwei zueinander und zur Kondensatoranordnung in Reihe geschalteten Ladewiderstände dabei so ausgelegt, dass in der Startphase des Ladens der entladenen Kondensatoranordnung der Ladestrom aufgrund des Gesamtwiderstands der in Reihe geschalteten (und nicht überbrückten) Ladewiderstände einen maximal zulässigen Ladestrom (zulässig nur für kurzzeitige maximale Belastung des Gleichspannungszwischenkreises) nicht überschreitet. Auch der vorbestimmte erste Schwellwert sowie der zugehörige überbrückte mindestens eine Ladewiderstand sind so ausgelegt, dass beim Überschreiten des ersten Schwellwerts der Ladestrom aufgrund der Überbrückung des mindestens einen Ladewiderstands auf einen Wert ansteigt, der unterhalb des maximal zulässigen Ladestroms liegt.

Der erfindungsgemäße Frequenzumrichter kann eine Mehrzahl der beschriebenen Überbrückungsschaltungen umfassen, welche mit zunehmender Ladung der Kondensatoranordnung einzelne der Ladewiderstände oder Gruppen der Ladewiderstände überbrücken, um den Ladestrom wieder zu erhöhen. Die ersten Schwellwerte der einzelnen Überbrückungsschaltungen sowie die zugeordneten Ladewiderstände bzw. Gruppen von Ladewiderständen sind dabei wieder jeweils im Hinblick auf eine Begrenzung des maximalen Ladestroms konzipiert.

Um den größten Teil der auftretenden Typen von Störungen des Versorgungsnetzes ausgleichen zu können und Schäden an nachgeschalteten Geräten oder Anlagen zu reduzieren, liegt vorzugsweise die vorbestimmte Zeitdauer, für die die Pufferungseinrichtung im Falle eines störungsbedingten Abfalls der Eingangsspannung die Leistungsabgabe des Frequenzumrichters aufrecht erhält, zwischen ungefähr 0,5 Sekunden und ungefähr 5 Sekunden, vorzugsweise bei ungefähr einer Sekunde. Es wurde festgestellt, dass die vorbestimmte Zeitdauer mindestens ungefähr 0,5 Sekunden betragen sollte, um gelegentlich auftretendes Flackern der Versorgungsspannung zuverlässig überbrücken zu können. Ferner können nachgeschaltete Geräte oder Anlagen innerhalb von etwa 5 Sekunden gesichert heruntergefahren werden oder in einen Wartezustand gebracht werden, so dass eine weitere Verlängerung der vorbestimmten Zeitdauer den damit verbundenen erhöhten Aufwand an Kondensatorbestückung und Ladezeit nicht mehr rechtfertigen könnte. Bei ungefähr 1 Sekunde wurde der für die Praxis optimale Ausgleich zwischen dem Bedürfnis einer Kosteneinsparung für die Kondensatoranordnung und dem Bedürfnis einer ausreichend großen vorbestimmten Zeitdauer der Überbrückung eines Spannungsabfalls erreicht.

In praktischen Versuchen wurde ferner festgestellt, dass vorzugsweise das Verhältnis zwischen der Gesamtkapazität der Kondensatoranordnung und der Sollleistung des Leistungsverbrauchers (also zum Beispiel der Nennleistung eines angeschlossenen Elektromotors) zwischen ungefähr 0,5 mF/kW und ungefähr 2,0 mF/kW, vorzugsweise bei ungefähr 1,1 mF/kW, liegen sollte. Die sich damit einstellenden Effekte entsprechen den vorstehend für die Einstellung der vorbestimmten Zeitdauer erläuterten Effekte bei Überschreiten oder Unterschreiten der genannten Grenzwerte bzw. bei Einstellung des Optimalwerts, da bei zunehmender Gesamtkapazität der Kondensatoranordnung auch die vorbestimmte Zeitdauer, für die die Pufferungseinrichtung die Sollleistungsabgabe aufrecht erhalten kann, zunimmt.

In einer weiteren Ausführungsform weist der erfindungsgemäße Frequenzumrichter ferner eine nutzerbetätigbare Entladeschaltung auf, welche bei Betätigung die Kondensatoranordnung über mindestens einen Entladewiderstand überbrückt. Bei Betätigung der Entladeschaltung kann somit eine in der Kondensatoranordnung gespeicherte Ladung über den Entladewiderstand ausgeglichen werden, wobei durch die Größe des Entladewiderstands die Zeitdauer der Entladung und damit einhergehend die Belastung der Entladeschaltung festgelegt werden kann. Eine solche Entladeschaltung ermöglicht das gezielte Entladen der Kondensatoranordnung, um Wartungsarbeiten an der Kondensatoranordnung auszuführen.

Wenn die Kondensatoranordnung eine Mehrzahl von Kondensatoren umfasst, so kann die Entladeschaltung vorzugsweise dazu betätigbar sein, selektiv eine Auswahl der Kondensatoren zu entladen. Dies hat den Vorteil, dass im Falle von Wartungsarbeiten, die nur Teile der Kondensatoren betreffen, nicht die gesamte Kondensatoranordnung entladen werden muss.

In einer einfachen und benutzerfreundlichen Variante ist vorgesehen, dass die Entladeschaltung einen Tastschalter aufweist und dass die Entladeschaltung bei einer einzelnen Betätigung des Tastschalters eine vorbestimmte Auswahl der Kondensatoren entlädt und bei einer weiteren Betätigung des Tastschalters eine andere Auswahl der Kondensatoren entlädt. Die Entladeschaltung kann dann nur mit einem Tastschalter auskommen, was die Kosten des Frequenzumrichters senkt und eine übersichtlichere Bedienung erlaubt.

Prinzipiell lässt sich der erfindungsgemäße Frequenzumrichter mit einer Kondensatoranordnung verwirklichen, welche nur einen einzigen, entsprechend dimensionierten Kondensator aufweist. Aufgrund der großen Leistungsdichte, die auf die Kondensatoranordnung übertragen und von dieser abgegeben wird, empfiehlt sich jedoch, dass die Kondensatoranordnung eine Mehrzahl von in Reihe zueinander geschalteten Kondensatorbänken aufweist, wobei jede Kondensatorbank mindestens einen Kondensator, vorzugsweise eine Mehrzahl von parallel zueinander geschalteten Kondensatoren mit gleichen Kenndaten, umfasst. Eine solche Konfiguration verbessert auch die Zuverlässigkeit des Frequenzumrichters.

Nach einem zweiten Aspekt der vorliegenden Erfindung wird die eingangs genannte Aufgabe der Erfindung ferner gelöst durch ein Verfahren zum Umrüsten eines Frequenzumrichters zum Betreiben eines Leistungsverbrauchers, insbesondere eines Elektromotors, wobei der Frequenzumrichter umfasst: eine Gleichrichterschaltung zum Umwandeln einer Eingangsspannung des Frequenzumrichters in eine Gleichrichterausgangsspannung, einen Gleichspannungszwischenkreis zum Glätten der Gleichrichterausgangsspannung und zur Erzeugung einer Gleichspannung, wobei der Gleichspannungszwischenkreis eine Kondensatoranordnung mit mindestens einem Kondensator, aufweist, einen Wechselrichter zum Umwandeln der Gleichspannung in eine Wechselspannung bestimmter Frequenz und Amplitude zur Ansteuerung des Leistungsverbrauchers, wobei das Verfahren einen Schritt des Umrüstens der Kondensatoranordnung des Gleichspannungszwischenkreises umfasst, so dass die Kondensatoranordnung eine solche vorbestimmte Menge elektrischer Energie speichern kann, dass die Kondensatoranordnung als Energie speichernder Teil einer Pufferungseinrichtung im Falle eines störungsbedingten Abfalls der Eingangsspannung eine für den Betrieb des Leistungsverbrauchers erforderliche Sollleistungsabgabe des Frequenzumrichters durch Abgabe der gespeicherten elektrischen Energie für eine vorbestimmte Zeitdauer aufrecht erhalten kann. Das erfindungsgemäße Verfahren kann insbesondere zum Umrüsten eines konventionellen Frequenzumrichters verwendet werden, um in einfacher und kostengünstiger Weise einen erfindungsgemäßen Frequenzumrichter der vorstehend beschriebenen Art herzustellen. Der so hergestellte Frequenzumrichter kann eines oder mehrere der vorstehend in dieser Beschreibung in Bezug auf den erfindungsgemäßen Frequenzumrichter beschriebenen Merkmale aufweisen, so dass ein erfindungsgemäßer Frequenzumrichter mit den entsprechend beschriebenen Effekten und Vorteilen in einfacher Weise durch das erfindungsgemäße Verfahren hergestellt werden kann.

Die Erfindung wird nachfolgend anhand bevorzugter Ausführungsbeispiele unter Bezugnahme auf die beigefügten Zeichnungen näher erläutert. Es zeigen:
- Figur 1:: ein Schaltbild eines erfindungsgemäßen Frequenzumrichters gemäß einem Ausführungsbeispiel der Erfindung,
- Figur 2:: eine grafische Darstellung des zeitlichen Verlaufs von Eingangsspannung, Ausgangsspannung und Stromfluß über die Kondensatoranordnung,
- Figur 3:: eine schematische Illustration einer Anordnung von Kondensatoren in einem Gehäuse eines Frequenzumrichters gemäß dem Ausführungsbeispiel der Erfindung und
- Figur 4:: eine Seitenansicht von in Fig. 3 gezeigten Bauteilen.

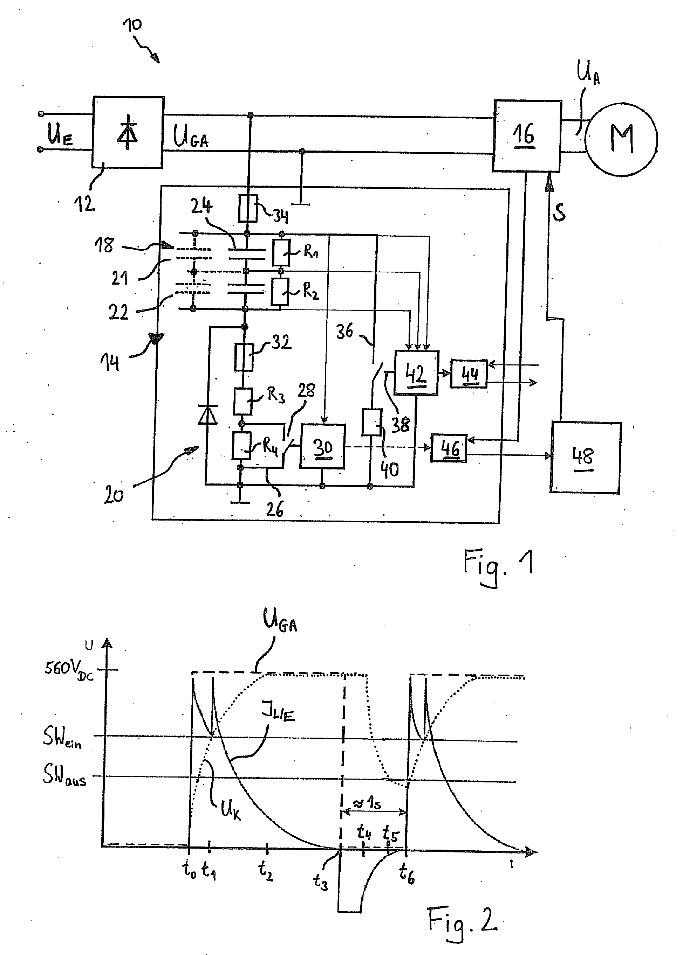

Fig. 1 zeigt einen Schaltplan eines Frequenzumrichters 10, welcher eine Eingangsspannung U_{E} (z.B. ungefähr 360V, 50 Hz Wechselspannung) in eine Ausgangsspannung U_{A} (Wechselspannung) mit bestimmter Amplitude und bestimmter Frequenz umwandelt, um mit der Ausgangsspannung U_{A} einen Elektromotor M zu betreiben.

Wie an sich bekannt, ist der Frequenzumrichter 10 aus drei Grundeinheiten aufgebaut: Gleichrichterschaltung 12, Gleichspannungszwischenkreis 14 und Wechselrichter 16. Die Gleichrichterschaltung 12 wandelt die Eingangsspannung U_{E} in eine Gleichrichterausgangsspannung U_{GA} um, welche ausschließlich Spannungsanteile einer Polarität aufweist, jedoch weiterhin mit Amplitudenschwankungen der Frequenz oder der doppelten Frequenz der Eingangsspannung U_{E} (im vorliegenden Beispiel beträgt U_{GA} etwa gleich 560V DC). Der Ausgang der Gleichrichterschaltung 12 ist mit dem Wechselrichter 16 verbunden, welcher schließlich die Ausgangsspannung U_{A} mit bestimmter Amplitude und bestimmter Frequenz (oder mit bestimmtem Tastverhältnis bei PWM-Ansteuerung des Elektromotors) bereitstellt, so dass der Elektromotor mit vorbestimmter Solldrehzahl bzw. vorbestimmtem Solldrehmoment dreht.

Zwischen Gleichrichterschaltung 12 und Wechselrichter 16 ist in Parallelschaltung sowohl zur Gleichrichterschaltung als auch zum Wechselrichter der Gleichspannungszwischenkreis 14 geschaltet, welcher eine Kondensatoranordnung 18 aufweist, um die Gleichrichterausgangsspannung U_{GA} zu glätten.

Erfindungsgemäß umfasst der Gleichspannungszwischenkreis 14 ferner eine Pufferungseinrichtung zur Speicherung von Energie, welche im Falle eines störungsbedingten Abfalls der Eingangsspannung U_{E} eine für den Betrieb des Motors M erforderliche Sollleistungsabgabe des Frequenzumrichters 10 durch Abgabe der gespeicherten elektrischen Energie für eine vorbestimmte Zeitdauer aufrecht erhält. Dabei verwendet die Pufferungseinrichtung die Kondensatoranordnung 18 zur Speicherung der elektrischen Energie und der Gleichspannungszwischenkreis 14 umfasst ferner eine Lade-/Entladeelektronik 20, welche die Kondensatoranordnung 18 optimiert lädt oder entlädt und den Ausgang des Frequenzumrichters 10 schaltet.

Die Kondensatoranordnung 18 umfasst zwei in Reihe zueinander geschaltete Kondensatorbänke 21, 22 mit jeweils einer gleichen Anzahl von parallel zueinander geschalteten Kondensatoren 24 (in Fig. 1 sind jeweils nur zwei Kondensatoren pro Bank dargestellt). Die Kondensatoren 24 weisen alle gleiche Bauart auf, um sicherzustellen, dass ihre Kenndaten im Wesentlichen gleich sind und somit ein gleichmäßiges Laden und Entladen der Kondensatoren ermöglicht wird. Um Produktionsschwankungen möglichst ausschließen zu können, werden die Kondensatoren vor der Montage ausgemessen. Ein gleichmäßiges Laden bzw. Entladen wird ferner durch Widerstände R₁, R₂ oder/und durch Dioden (nicht dargestellt) unterstützt, welche jeweils parallel zu den jeweiligen, in Reihe miteinander verbundenen Kondensatoren bzw. Kondensatorbänken geschaltet sind. Eine solche Schutzschaltung ermöglicht einen Ausgleich der Spannungsabfälle über den in Reihe geschalteten Komponenten, so dass Kapazitätstoleranzen oder unterschiedliche Leckströme an den Komponenten ausgeglichen werden können.

Die Lade-/Entladeelektronik 20 umfasst zwei in Reihe zueinander sowie in Reihe zur Kondensatoranordnung 18 geschaltete Ladewiderstände R₃, R₄ (z.B. 100 W-Hochleistungswiderstände) zur Begrenzung des Ladestroms in Abhängigkeit von der Ladung der Kondensatoranordnung 18. Diese Widerstände sind dafür ausgelegt, für eine gewisse Zeitdauer (z.B. 1 Sekunde) mit einem vielfachen (z.B. dem 25-fachen) ihrer Nennleistung betrieben zu werden. Der Widerstand R₄ kann durch eine Überbrückungsschaltung 26 überbrückt werden, indem ein Überbrückungsschalter 28 nach Maßgabe eines Steuersignals eines elektronischen Steuer-/Regelglieds 30 geschlossen wird.

In der die Kondensatoranordnung 18 enthaltenden Reihenschaltung, ist ferner im masseseitigen Abschnitt ein Ladestrombegrenzer 32 angeordnet und im phasenseitigen Abschnitt ist ein Entladestrombegrenzer 34 vorgesehen, wobei der Ladestrombegrenzer 32 einen Ladestrom auf maximal 4 A begrenzt und der Entladestrombegrenzer 34 Stromspitzen während der Entladung der Kondensatoranordnung 18 auf einen Wert von 32 A begrenzt. Die Strombegrenzer 32, 34 können alternativ an irgendeiner anderen Position in der Reihenschaltung angeordnet sein.

Das elektronische Steuer-/Regelglied 30 umfasst ein Spannungsmessgerät (nicht dargestellt), welches eine über der Kondensatoranordnung 18 abfallende Spannung U_{K} erfasst, die ein Maß für die in der Kondensatoranordnung 18 insgesamt gespeicherte Ladungsmenge und somit ein Maß für den Ladezustand der Kondensatoranordnung 18 ist. In später noch zu beschreibender Weise steuert das elektronische Steuer-/Regelglied 30 den Überbrückungsschalter 28 nach Maßgabe der Kondensatorspannung U_{K}.

Der Frequenzumrichter 10 umfasst ferner eine Entladeschaltung 36 mit einem Entladeschalter 38 und einem Entladewiderstand 40, welche in Reihe miteinander verbunden sind. Im geschlossenen Zustand des Entladeschalters 38 wird die Ladung der Kondensatoranordnung 18 über den Entladewiderstand 40 kontrolliert entladen. Der Entladeschalter 38 wird durch eine elektronische Steuereinheit 42 angesteuert, welche ferner über Spannungsmessmittel (nicht dargestellt) verfügt, um die über den Kondensatorbänken 21, 22 der Kondensatoranordnung 18 jeweils abfallenden Spannungen zu erfassen, die den in den jeweiligen Kondensatorbänken 21, 22 gespeicherten Ladungen entsprechen. Über einen Optokoppler 44 ist die Entladeschaltung 36, einschließlich der elektronischen Steuereinheit 42 mit Ein-/Ausgabemitteln (nicht dargestellt) verbunden, insbesondere mit einem Tastschalter zur manuellen Betätigung der Entladeschaltung 36 sowie mit einer LED-Anzeige, welche einen Ladungszustand oder Entladungszustand anzeigt.

Der Wechselrichter 16 ist zur Leistungsaufnahme parallel zur Gleichrichterschaltung 12 sowie parallel zum Gleichspannungszwischenkreis 14 geschaltet. Ferner steht der Wechselrichter 16 in Informationaustausch mit dem Gleichspannungszwischenkreis 14 über einen Optokoppler 46 und eine speicherprogrammierbare Steuerung (SPS) 48, um von dem elektronischen Steuer-/Regelglied 30 eine Information über den Ladungszustand der Kondensatoranordnung 18 zu erhalten. Die speicherprogrammierbare Steuerung (SPS) 48 schaltet ein Freigabesignal S des Frequenzumrichters 10, um einen Ausgang des Wechselrichters 16 freizugeben, wenn eine von dem elektronischen Steuer-/Regelglied 30 übermittelte Information über den Ladezustand der Kondensatoranordnung 18 einen ausreichenden Ladungszustand anzeigt.

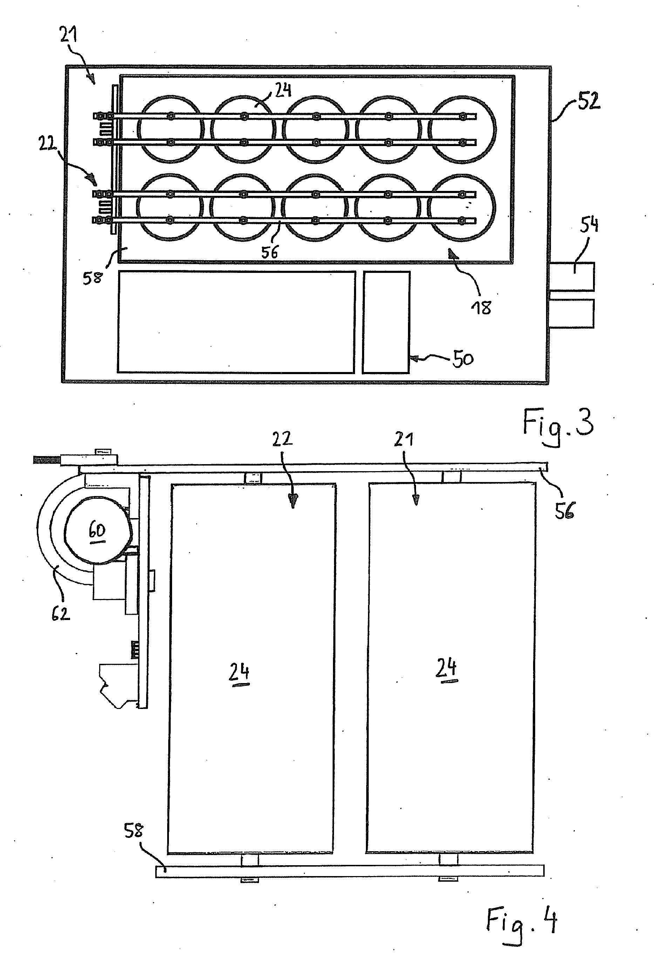

Eine konkrete Konstruktion eines Frequenzumrichters 10 mit Gleichspannungszwischenkreis 14 gemäß dem Ausführungsbeispiel der Erfindung zeigen Fig. 3 und 4. Zu erkennen sind in Fig. 3 zwei Kondensatorbänke 21, 22, welche jeweils fünf gleichartige Kondensatoren 24 tragen, die parallel zueinander geschaltet sind. Die beiden Kondensatorbänke 21, 22 sind in Reihenschaltung miteinander verbunden. Schematisch ist ferner in Fig. 3 weitere Schaltungselektronik zur Bereitstellung des Gleichspannungszwischenkreises 14, der Gleichrichterschaltung 12 sowie des Wechselrichters 16 mit dem Bezugszeichen 50 angedeutet. Sämtliche Bauteile des Frequenzumrichters, einschließlich der Kondensatoren 24 der Kondensatoranordnung 18, sind in einem einzigen Gehäuse 52 untergebracht und können somit gemeinschaftlich durch entsprechende Befestigungsmittel 54 an einer Anlage befestigt werden. In Fig. 4 ist eine seitliche Darstellung der Kondensatorbänke 21, 22 dargestellt.

Die Fig. 3 und 4 zeigen ferner Sammelschienen 56 (zum Beispiel aus Kupfer, 2 mm), sowie eine Montageplatte 58 (zum Beispiel aus Aluminium, 4 mm), welche der Befestigung sowie Kontaktierung der Kondensatoren 24 dienen. In Fig. 4 ist ferner eine Überspannungsschutzschaltung aus einem Varistor 60 und einer Schutzdiode 62 zu erkennen.

Unter Bezugnahme auf Fig. 2 wird nachfolgend die Funktionsweise des in Fig. 1 gezeigten Frequenzumrichters der Erfindung erläutert. In Fig. 2 zeigt die gestrichelte Linie den zeitlichen Verlauf der Amplitude der Gleichrichterausgangsspannung U_{GA}, wobei die in der Gleichrichterausgangsspannung noch vorhandene periodische Schwankung der Spannung mit der Frequenz oder der doppelten Frequenz der Netz-Eingangsspannung (50 oder 100 Hz) in Fig. 2 nicht dargestellt ist, sondern die gestrichelte Linie bereits einen geglätteten Wert darstellt. Mit durchgezogener Linie ist in Fig. 2 der zeitliche Verlauf des Lade-/Entladestroms I_{L/E} dargestellt, der auf die Kondensatoranordnung 18 fließt bzw. von dieser abfließt. Ferner ist in Fig. 2 mit gepunkteter Linie die über der Kondensatoranordnung 18 insgesamt abfallende Spannung U_{K} dargestellt, welche ein Maß für die Gesamtladung der Kondensatoranordnung 18 darstellt.

Zu einem Zeitpunkt t₀ wird die Gleichrichterschaltung eingeschaltet oder die Eingangsspannung U_{E} wird angelegt, so dass sich am Ausgang der Gleichrichterschaltung 12 eine konstante Gleichrichterausgangsspannung U_{GA} von ungefähr 560 V einstellt. Gleichzeitig nimmt der auf die entleerte Kondensatoranordnung 18 fließende Strom I_{L/E} einen Maximalwert von z.B. 4 A an. Zum Zeitpunkt t₀ ist der Überbrückungsschalter 28 durch entsprechende Steuerung des elektronischen Steuer-/Regelglieds 30 geöffnet, so dass beide Ladewiderstände R₃, R₄ miteinander in Reihe zur Kondensatoranordnung 18 geschaltet sind, um den Maximalstrom I_{L/E} über die Kondensatoranordnung 18 zu begrenzen.

Nach dem Zeitpunkt t₀ steigt die Ladung der Kondensatoranordnung 18 und damit die Kondensatorspannung U_{K} gemäß einer exponentiellen Ladekurve an und der Ladestrom I_{L/E} fällt dementsprechend gemäß einer exponentiellen Kurve ab. Die Kondensatorspannung U_{K} wird dabei laufend durch das elektronische Steuer/Regelglied 30 überwacht. Zu einem Zeitpunkt t₁ überschreitet die Kondensatorspannung U_{K} einen Schwellwert SWₑᵢₙ, woraufhin das elektronische Steuer-/Regelglied 30 den Überbrückungsschalter 28 schließt, um den Ladewiderstand R₄ zu überbrücken. Damit erhöht sich die über der Kondensatoranordnung 18 anliegende Ladespannung, sodass der Ladestrom I_{L/E} wieder sofort ansteigt. Die Ladewiderstände R₃ und R₄ weisen derartige Widerstände auf, dass, wie in Fig. 2 zu sehen ist, das Maximum des Ladestroms I_{L/E} sowohl zum Zeitpunkt to als auch zum Zeitpunkt t₁ in etwa gleich groß ist und in etwa dem maximal kurzzeitig zulässigen Ladestrom (z.B. 4 A) entspricht.

Nach dem Zeitpunkt t₁ fällt der Ladestrom I_{L/E} von dem maximalen Wert erneut mit exponentiellem Zeitverlauf ab, während die Gesamtladung der Kondensatoranordnung (entspricht U_{K}) weiter ansteigt.

Zu einem Zeitpunkt t₂ ist die Kondensatoranordnung 18 im wesentlichen vollständig geladen, so dass U_{K} nicht weiter ansteigt. Dieser Zustand wird von dem elektronischen Steuer-/Regelglied 30 erfasst, welches ein Freigabesignal über den Optokoppler 46 an die SPS 48 sendet, woraufhin die SPS 48 die Ausgabe des Wechselrichters 16 freischaltet, um elektrische Leistung mit einer Spannung U_{A} an den Elektromotor M abzugeben. Der Frequenzumrichter 10 arbeitet nun im normalen Betriebsmodus, wobei der Wechselrichter 16 eine Wechselspannung U_{A} mit bestimmter Amplitude und bestimmter Frequenz ausgibt und die Kondensatoranordnung 18 einerseits die Gleichrichterausgangsspannung U_{GA} glättet und andererseits als eine ständig aufgeladene Pufferungseinrichtung eine vorbestimmte Menge an elektrischer Energie für den Fall eines Abfalls der Eingangsspannung speichert.

Zum Zeitpunkt t₃ kommt es störungsbedingt zu einem Abfall der Eingangsspannung U_{E}, so dass die Gleichrichterausgangsspannung U_{GA} plötzlich auf Null abfällt. Erfindungsgemäß fließt dann ein Entladestrom I_{L/E} von der geladenen Kondensatoranordnung 18 zum Wechselrichter 16, um die Gleichspannungsversorgung des Wechselrichters 16 für eine vorbestimmte Zeitdauer aufrecht zu erhalten. Die Ladewiderstände R₃, R₄ sowie der Ladestrombegrenzer 32 sind durch eine Entladediode (z.B. Siliziumdiode) überbrückt, welche in Flussrichtung einen Stromfluss von bis zu 40 A erlaubt. Auf diese Weise wird der Entladestrom nur durch den Entladestrombegrenzer 34 begrenzt, und zwar beispielsweise auf einen Maximalwert von ungefähr 32 A.

Während der ersten Zeit der Entladung der Kondensatoranordnung 18 fließt somit ein Entladestrom von maximal ungefähr 32 A von der Kondensatoranordnung 18 zum Wechselrichter 16 (in Fig. 2 ist der ab dem Zeitpunkt t₃ fließende Entladestrom I_{L/E} aus illustrativen Gründen mit kleinerer Amplitude dargestellt). Zum Zeitpunkt t₄ ist die Ladung der Kondensatoranordnung soweit abgesunken, dass ein aufgrund der Kondensatorladung fließender Entladestrom I_{L/E} unter den Begrenzungswert des Entladungsstrombegrenzers 34 absinkt, woraufhin die Kondensatorspannung U_{K} und der Entladestrom I_{L/E} exponentiell abfallen. Wenn die Kondensatorspannung U_{K} einen zweiten Schwellwert SWₐᵤₛ unterschreitet, so öffnet das elektronische Steuer-/Regelglied 30 den Überbrückungsschalter 28, so dass bei einem darauffolgenden Ladevorgang eine Ladestrombegrenzung durch Reihenschaltung der Widerstände R₃ und R₄ erfolgt (Zeitpunkt t₅),

Zum Zeitpunkt T₆, welcher ungefähr 1 Sekunde nach dem Zeitpunkt t₃ liegt, ist die Ladung der Kondensatoranordnung 18 soweit abgesunken, dass eine ausreichende Versorgung des Wechselrichters 16 und damit eine ausreichende Leistungsabgabe an den Elektromotor M gefährdet ist. Im vorliegenden Ausführungsbeispiel wird angenommen, dass zum Zeitpunkt t₆ die Eingangsspannung U_{E} wieder hergestellt ist (Ende der Störung), so dass der Wechselrichter 16 wieder mit der Gleichrichterausgangsspannung U_{GA} versorgt werden kann. Gleichzeitig wird durch die Gleichrichterausgangsspannung U_{GA} auch die Kondensatoranordnung 18 in zwei aufeinanderfolgenden Stufen analog dem vorstehend für den Zeitraum von t₀ bis t₂ beschriebenen Ladevorgang geladen, so dass die Kondensatoranordnung 18 bereits nach wenigen Sekunden wieder vollständig aufgeladen ist und für die Pufferung einer nächsten Netzstörung vorbereitet ist.

Die Betriebszustände des Frequenzumrichters 10 werden in geeigneter Weise durch Anzeigemittel (nicht gezeigt) am Gehäuse 52 angezeigt. Auf diese Weise kann ein Spannungsungleichgewicht der Kondensatoren oder der Kondensatorbänke 21, 22 oder eine sonstige Störung (Ausfall eines Kondensators oder einer Kondensatorbank) angezeigt werden. Die Anzeigemittel können ferner einen Ladezustand der Kondensatoranordnung 18 anzeigen. In einer einfachen Ausführungsform kann die Anzeigevorrichtung mit drei LED's verwirklicht werden: "betriebsbereit", "Ladung/Entladung" und "Fehler/nicht betriebsbereit".

Für eine kontrollierte Entladung der Kondensatoranordnung 18 weist der Frequenzumrichter 10 ferner einen nicht dargestellten Tastschalter auf, welcher bei Betätigung durch Auslösen eines entsprechenden Signals der elektronischen Steuereinheit 42 den Entladeschalter 38 schließt, um die Kondensatoranordnung 18 über den Entladewiderstand 40 zu entladen. Aus Sicherheitsgründen muss für eine Entladung der Kondensatoranordnung 18 der Frequenzumrichter vom Netz getrennt werden. Die elektronische Steuereinheit 42 umfasst einen Zeitschalter, welcher bei Betätigung des Tastschalters den Entladeschalter 38 für eine vorbestimmte Zeit schließt oder in Abhängigkeit von einem die Ladung der Kondensatoranordnung 18 repräsentierenden Ladungswert den Entladeschalter 38 schließt und öffnet. Damit muss der Taster nicht für die gesamte Zeitdauer der Entladung betätigt werden. Nach der Entladung der Kondensatoranordnung 18 können Wartungsarbeiten, wie etwa an der Spannungszuführung oder der Austausch einzelner Kondensatoren, gefahrlos durchgeführt werden.

## Patentansprüche

1. Frequenzumrichter (10) zum Betreiben eines Leistungsverbrauchers (M), insbesondere eines Elektromotors, wobei der Frequenzumrichter (10) umfasst:
- eine Gleichrichterschaltung (12) zum Umwandeln einer Eingangsspannung (U_{E}) des Frequenzumrichters (10) in eine Gleichrichterausgangsspannung (U_{GA}),
- einen Gleichspannungszwischenkreis (14) zum Glätten der Gleichrichterausgangsspannung (U_{GA}) und zur Erzeugung einer Gleichspannung, wobei der Gleichspannungszwischenkreis (14) eine Kondensatoranordnung (18) mit mindestens einem Kondensator (24) aufweist, sowie
- einen Wechselrichter (16) zum Umwandeln der Gleichspannung in eine Wechselspannung (U_{A}) bestimmter Frequenz und Amplitude zur Ansteuerung des Leistungsverbrauchers (M),
**gekennzeichnet durch**
- eine Pufferungseinrichtung (18, 20), welche eine vorbestimmte Menge elektrischer Energie speichert und welche im Falle eines störungsbedingten Abfalls der Eingangsspannung (U_{E}) eine für den Betrieb des Leistungsverbrauchers (M) erforderliche Sollleistungsabgabe des Frequenzumrichters (10) **durch** Abgabe der gespeicherten elektrischen Energie für eine vorbestimmte Zeitdauer aufrecht erhält,
wobei die Pufferungseinrichtung die elektrische Energie in der Kondensatoranordnung (18) des Gleichspannungszwischenkreises (14) speichert.

2. Frequenzumrichter (10) nach Anspruch 1, **dadurch gekennzeichnet, dass** die Kondensatoranordnung (18) durch die Gleichrichterausgangsspannung (U_{GA}) geladen wird.

3. Frequenzumrichter (10) nach Anspruch 1 oder Anspruch 2, ferner **gekennzeichnet durch** eine Ladungsüberwachungseinrichtung (20, 30) zur Erfassung eines die Ladung der Kondensatoranordnung (18) repräsentierenden Ladungswerts (U_{K}), insbesondere einer Spannung der Kondensatoranordnung (18) oder einer eine Lade- oder Entladezeit angebenden Zeitgröße, sowie **durch** eine elektronische Steuereinrichtung (20, 30, 42, 48), welche den Frequenzumrichter (10) in Abhängigkeit von der Ladung der Kondensatoranordnung (18) ansteuert.

4. Frequenzumrichter (10) nach Anspruch 3, **dadurch gekennzeichnet, dass** die elektronische Steuereinrichtung (48) in einem Startbetriebsmodus die Leistungsabgabe des Frequenzumrichters unterbricht, wenn die Ladung der Kondensatoranordnung (18) unter einer vorbestimmten Vollladung liegt, und die Leistungsabgabe des Frequenzumrichters (10) freigibt, wenn die Gesamtladung der Kondensatoranordnung (18) die vorbestimmte Vollladung erreicht oder überschreitet.

5. Frequenzumrichter (10) nach Anspruch 3 oder Anspruch 4, **dadurch gekennzeichnet, dass** die elektronische Steuereinrichtung einen Ladesteuer-/regelabschnitt (20) aufweist, welcher eine an dem mindestens einen Kondensator (24) der Kondensatoranordnung (18) anliegende Ladespannung nach Maßgabe des durch die Ladungsüberwachungseinrichtung (30) erfassten Ladungswerts (U_{K})einstellt.

6. Frequenzumrichter (10) nach einem der Ansprüche 3 bis 5, **dadurch gekennzeichnet, dass** die Kondensatoranordnung (18) eine Mehrzahl von Kondensatoren (24) aufweist und dass die elektronische Steuereinrichtung einen Ladesteuer-/regelabschnitt (20) aufweist, welcher nach Maßgabe des durch die Ladungsüberwachungseinrichtung erfassten Ladungswerts eine bestimmte Ladespannung an eine bestimmte Auswahl von Kondensatoren (24) der Kondensatoranordnung (18) anlegt.

7. Frequenzumrichter (10) nach Anspruch 5 oder Anspruch 6, **dadurch gekennzeichnet, dass** der Ladesteuer-/regelabschnitt (20) mit zunehmender Ladung der Kondensatoranordnung (18) die Ladespannung zunehmend, insbesondere stufenweise, erhöht.

8. Frequenzumrichter (10) nach Anspruch 7, **dadurch gekennzeichnet, dass** der Ladesteuer-/regelabschnitt (20) mindestens zwei zueinander und zur Kondensatoranordnung (18) in Reihe geschaltete Ladewiderstände (R₃, R₄) umfasst, wobei mindestens einer der Ladewiderstände (R₃, R₄) zu einer elektronisch ansteuerbaren Überbrückungsschaltung (26) parallel geschaltet ist, wobei der Ladesteuer-/regelabschnitt (20) nach Maßgabe des Ladungswerts der Kondensatoranordnung (18) die Überbrückungsschaltung (26) ansteuert, um den mindestens einen Ladewiderstand (R₄) zu überbrücken oder zuzuschalten, so dass die Ladespannung der Kondensatoranordnung (18) auf einen größeren beziehungsweise einen kleineren Wert eingestellt wird.

9. Frequenzumrichter (10) nach Anspruch 8, **dadurch gekennzeichnet, dass** in einer ersten Phase eines Startbetriebsmodus des Frequenzumrichters (10) der Ladesteuer-/regelabschnitt die Überbrückungsschaltung (26) öffnet, um den mindestens einen Ladewiderstand (R₄) zuzuschalten, und dass die Überbrückungsschaltung den mindestens einen Ladewiderstand (R₄) überbrückt, wenn die Ladung der Kondensatoranordnung (18) einen vorbestimmten ersten Schwellwert (SWₑᵢₙ) überschreitet.

10. Frequenzumrichter (10) nach einem der vorhergehenden Ansprüche, **dadurch gekennzeichnet, dass** die vorbestimmte Zeitdauer, für die die Pufferungseinrichtung im Falle eines störungsbedingten Abfalls der Eingangsspannung die Sollleistungsabgabe des Frequenzumrichters (10) aufrecht erhält, zwischen ungefähr 0,5 Sekunden und ungefähr 5 Sekunden, vorzugsweise bei ungefähr einer Sekunde liegt.

11. Frequenzumrichter (10) nach einem der vorhergehenden Ansprüche, **dadurch gekennzeichnet, dass** das Verhältnis zwischen der Gesamtkapazität der Kondensatoranordnung (18) und der Sollleistung des Leistungsverbrauchers (M) zwischen ungefähr 0,5 mF/kW und ungefähr 2 mF/kW, vorzugsweise bei ungefähr 1,1 mF/kW liegt.

12. Frequenzumrichter (10) nach einem der vorhergehenden Ansprüche, ferner **gekennzeichnet durch** eine nutzerbetätigbare Entladeschaltung (36), welche bei Betätigung die Kondensatoranordnung (18) über mindestens einen Entladewiderstand (40) überbrückt.

13. Frequenzumrichter (10) nach Anspruch 12, **dadurch gekennzeichnet, dass** die Kondensatoranordnung (18) eine Mehrzahl von Kondensatoren (24) umfasst und wobei die Entladeschaltung (36) dazu betätigbar ist, selektiv eine Auswahl der Kondensatoren (24) zu entladen.

14. Frequenzumrichter (10) nach Anspruch 13, **dadurch gekennzeichnet, dass** die Entladeschaltung (36) einen Tastschalter aufweist und dass die Entladeschaltung (36) bei einer einzelnen Betätigung des Tastschalters eine vorbestimmte Auswahl der Kondensatoren (24) entlädt und bei einer weiteren Betätigung des Tastschalters eine andere Auswahl der Kondensatoren (24) entlädt.

15. Frequenzumrichter (10) nach einem der vorhergehenden Ansprüche, **dadurch gekennzeichnet, dass** die Kondensatoranordnung (18) eine Mehrzahl von in Reihe zueinander geschalteten Kondensatorbänken (20, 22) aufweist, wobei jede Kondensatorbank (20, 22) mindestens einen Kondensator (24), vorzugsweise eine Mehrzahl von parallel zueinander geschalteten Kondensatoren mit gleichen Kenndaten, umfasst.

16. Verfahren zum Umrüsten eines Frequenzumrichters zum Betreiben eines Leistungsverbrauchers (M), insbesondere eines Elektromotors, wobei der Frequenzumrichter (10) umfasst:
- eine Gleichrichterschaltung (12) zum Umwandeln einer Eingangsspannung des Frequenzumrichters in eine Gleichrichterausgangsspannung (U_{GA}),
- einen Gleichspannungszwischenkreis (14) zum Glätten der Gleichrichterausgangsspannung (U_{GA}) und zur Erzeugung einer Gleichspannung, wobei der Gleichspannungszwischenkreis (14) eine Kondensatoranordnung (18) mit mindestens einem Kondensator (24) aufweist,
- einen Wechselrichter (16) zum Umwandeln der Gleichspannung in eine Wechselspannung bestimmter Frequenz und Amplitude zur Ansteuerung des Leistungsverbrauchers (M),
**gekennzeichnet durch** den Schritt des Umrüstens der Kondensatoranordnung (18) des Gleichspannungszwischenkreises (14), so dass die Kondensatoranordnung (18) eine solche vorbestimmte Menge elektrischer Energie speichern kann, dass die Kondensatoranordnung (18) als Energie speichernder Teil einer Pufferungseinrichtung im Falle eines störungsbedingten Abfalls der Eingangsspannung eine für den Betrieb des Leistungsverbrauchers (M) erforderliche Sollleistungsabgabe des Frequenzumrichters (10) **durch** Abgabe der gespeicherten elektrischen Energie für eine vorbestimmte Zeitdauer aufrecht erhalten kann.
